# EUROPEAN PATENT SPECIFICATION

(11) **EP 3 656 554 B1**
(45) Date of publication and mention of the grant of the patent: **07.07.2021**
(21) Application number: 19208340.0
(22) Date of filing: 11.11.2019
(51) Int. Cl.: B32B 25/08, B32B 25/18, B32B 27/08, B32B 27/18, B32B 27/22, B32B 27/28, B32B 27/30, B32B 27/32, B32B 27/34, B32B 27/36, B32B 27/40

(54) **PASSIVE ANTI-ICING AND/OR DEICING SYSTEMS**
PASSIVE ENTEISUNGSSCHUTZ- UND/ODER ENTEISUNGSSYSTEME
SYSTÈMES PASSIFS D'ANTIGIVRAGE ET/OU DE DÉGIVRAGE

(30) Priority: 21.11.2018 US 201816198179
(43) Date of publication of application: 27.05.2020
(73) Proprietor: Goodrich Corporation, Charlotte, NC 28217-4578 (US)
(72) Inventor: GANGLOFF, John J., East Hartford, CT 06118 (US); TAYLOR, Andrew, Hudson, OH 44236 (US); MULLEN, James, Wadsworth, OH 44281 (US); GROLMAN, Danielle L., East Hartford, CT 06118 (US); WALSH, Peter J., Wethersfield, CT 06109 (US)
(74) Representative: Dehns

(56) References cited:
- US-A1- 2017 266 932
- US-A1- 2018 127 616

## Description

### BACKGROUND

### 1. Field

The present disclosure relates to deicing and/or anti-icing systems, e.g., for aircraft.

### 2. Description of Related Art

Ice on external aircraft surfaces can lead to dangerous flight conditions, including unsafe aerodynamic control surfaces. Aerospace deicing needs are currently addressed by external bladders or heating. It is desirable to improve the performance of current deicing technologies to reduce their overall aircraft power and weight performance penalties. There are also technical needs for deicing in aircraft locations not easily accessible by current deicing technologies, for example.

Conventional methods and systems have generally been considered satisfactory for their intended purpose. However, there is still a need in the art for improved anti-icing and deicing systems. The present disclosure provides a solution for this need. US2017266932 discloses a multilayer thermo-formable film to protect the surface of a workpiece.

### SUMMARY

A passive anti-icing and/or deicing device include an icephobic outer layer configured to prevent ice from forming and/or building up on the outer layer by preventing ice from adhering to the outer layer. The device includes a backer film attached to an underside of the icephobic outer layer, and an adhesive attached to the backer film on an opposite side of the backer film relative to the icephobic outer layer.

The icephobic outer layer is or includes an elastomeric reservoir at least partially saturated with an icephobic and/or hydrophobic lubricant. In certain embodiments, the backer film can be chemically bonded to the elastomeric reservoir. For example, the backer film and the icephobic outer layer are covalently bonded together. Any other suitable bonding and/or attachment is contemplated herein.

The backer film can be made of polyethylene terephthalate (PET), polyamide (PA) or urethane, for example. The backer film can be functionalized with silanes or other low molecular weight molecules having reactive end groups to create covalent bonding and enhanced adhesion to the elastomeric reservoir. The backer film is silanized to bond to the elastomeric reservoir. The reactive end groups could include vinyl, hydride, silanol, amine, epoxide, carbinol, methacryalate and acrylate moieties. The elastomeric reservoir can be made of silicone. Any other suitable material(s), e.g., configured to allow chemical bonding with both the elastomeric reservoir and the adhesive, is contemplated herein.

The adhesive can be made of a material that chemically bonds with the backer film. In certain embodiments, the adhesive can be a pressure sensitive adhesive (PSA). Any other suitable adhesive and/or type of bonding or attachment is contemplated herein.

The adhesive can be configured to bond to at least one of aluminum, fiberglass, or composite material (e.g., an aircraft structure). Any other suitable material for the adhesive to be used to bond to is contemplated herein.

An aircraft anti-icing and/or deicing system inlude an aircraft structure having a surface and an icephobic outer layer bonded to the surface of the aircraft structure and configured to prevent ice from forming and/or building up on the outer layer by preventing ice from adhering to the outer layer. The icephobic outer layer includes an elastomeric reservoir at least partially saturated with an icephobic and/or hydrophobic lubricant.

The structure can include an aircraft wing. The icephobic outer layer can be disposed on a majority of an upper surface of the wing. In certain embodiments, the icephobic outer layer can be disposed downstream of a pneumatic or electrically heated deicer.

In certain embodiments, the structure can include a pneumatic deicing bladder and/or an electrically heated deicer. In such embodiments, for example, the elastomeric reservoir can be chemically bonded directly to the surface of the structure. The surface of the structure can be silanized to bond to the elastomeric reservoir.

A method can include chemically bonding a backer film to an elastomeric reservoir that is saturated with an icephobic and/or hydrophobic lubricant. The method can also include chemically bonding an adhesive to an opposite side of the backer film.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a cross-sectional elevation view of an embodiment of a device in accordance with this disclosure, shown attached to a structure;
Fig. 2 is a perspective view of an embodiment of a system in accordance with this disclosure;
Fig. 3 is a perspective view of an embodiment of a system in accordance with this disclosure;
Fig. 4 is a perspective view of an embodiment of a system in accordance with this disclosure.
Fig. 5 is a cross-sectional elevation view of an embodiment of a system in accordance with this disclosure; and
Fig. 6 is a cross-sectional elevation view of an embodiment of a system in accordance with this disclosure.

### DETAILED DESCRIPTION

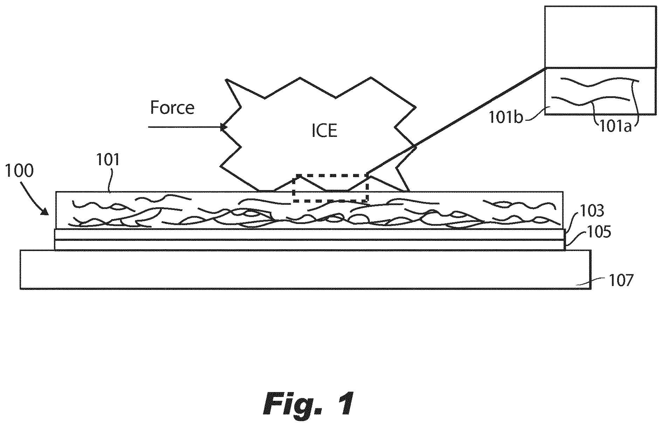

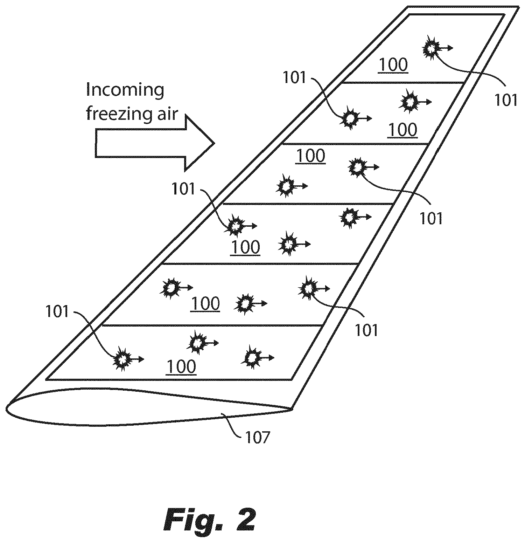

Reference will now be made to the drawings wherein like reference numerals identify similar structural features or aspects of the subject disclosure. For purposes of explanation and illustration, and not limitation, an illustrative view of an embodiment of a device in accordance with the disclosure is shown in Fig. 1 and is designated generally by reference character 100. Other embodiments and/or aspects of this disclosure are shown in Figs. 2-6. The systems and methods described herein can be used to prevent icing or aid in deicing.

Referring to Fig. 1, a passive anti-icing and/or deicing device 100 can include an icephobic outer layer 101 configured to prevent ice from forming and/or building up on the outer layer 101 by preventing ice from adhering to the outer layer 101. The device 100 can include a backer film 103 attached to an underside of the icephobic outer layer 101, and an adhesive 105 attached to the backer film 103 on an opposite side of the backer film 103 relative to the icephobic outer layer 101.

The icephobic outer layer 101 can be or include an elastomeric reservoir 101a (e.g., made of polydimethylsiloxane or any other suitable material, e.g., polymethylphenylsiloxane, polystyrene, polyisobutylene, fluorinated polyurethanes and polyurethanes). The reservoir can be at least partially saturated with an icephobic and/or hydrophobic lubricant 101b (e.g., an oligomeric or low molecular weight polymeric fluorocarbon, such as a perfluoropolyether or any other suitable material). In certain embodiments, the backer film 103 can be chemically bonded to the elastomeric reservoir 101. For example, the backer film 103 and the icephobic outer layer 101 are covalently bonded together. Any other suitable bonding and/or attachment is contemplated herein.

In certain embodiments, the backer film 103 can be made of polyethylene terephthalate (PET), polyamide (PA) or urethane, for example. The backer film 103 can be functionalized with silanes or other low molecular weight molecules having reactive end groups to create covalent bonding and enhanced adhesion to the elastomeric reservoir 101a to bond to the elastomeric reservoir 101a. The reactive end groups can include one or more of vinyl, hydride, silanol, amine, epoxide, carbinol, methacryalate, or acrylate moieties, for example. The elastomeric reservoir 101a can be made of silicone, for example. Any other suitable material(s), e.g., configured to allow chemical bonding with both the elastomeric reservoir 101a and the adhesive 105, is contemplated herein.

The adhesive 105 can be made of a material that chemically bonds with the backer film 103. In certain embodiments, the adhesive 105 can be a pressure sensitive adhesive (PSA). Any other suitable adhesive and/or type of bonding or attachment is contemplated herein.

The adhesive 105 can be configured to bond to at least one of aluminum, fiberglass, or composite material (e.g., an aircraft structure). Any other suitable material for the adhesive 105 to be used to bond to is contemplated herein.

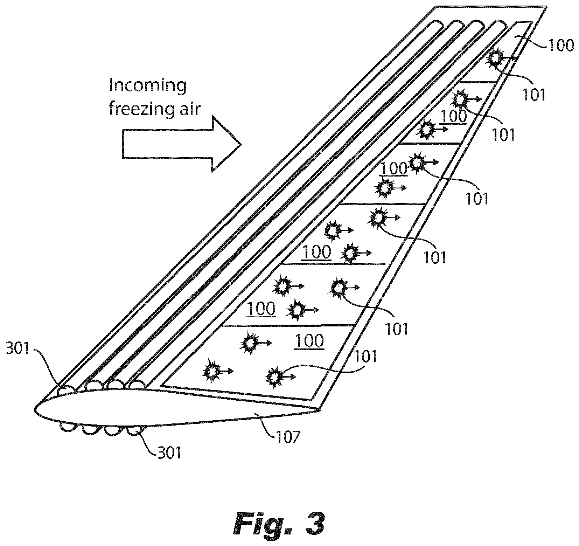

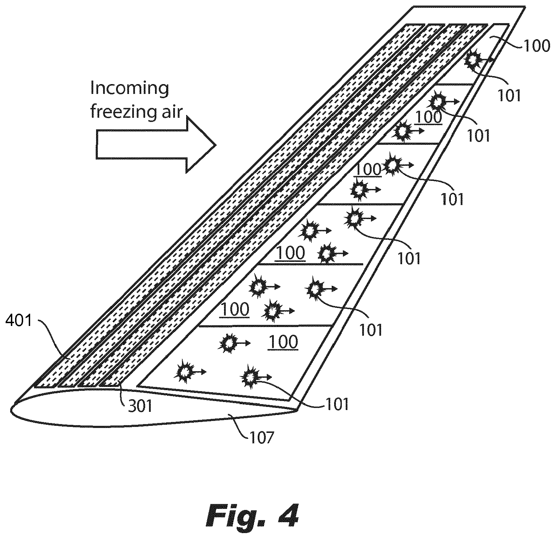

As shown in Fig. 1, the device 100 can be attached to a structure 107 by sticking the adhesive on the surface 107, e.g., and pressing down. For example, the structure 107 can be an aircraft skin or any other suitable structure where ice can form. For example, as shown in Figs. 2-4, the structure 107 can include an aircraft wing. The device 100 having the icephobic outer layer 101 can be disposed on a majority of an upper surface of the wing, e.g., as shown in Fig. 2. As shown in Figs. 3 and 4, in certain embodiments, the device 100 having the icephobic outer layer 101 can be disposed downstream of a pneumatic deicer 301 or electrically heated deicer 401. Any suitable size device 100 or coverage area on a structure 107 is contemplated herein (e.g., one or more panels as shown configured to conform to a wing taper).

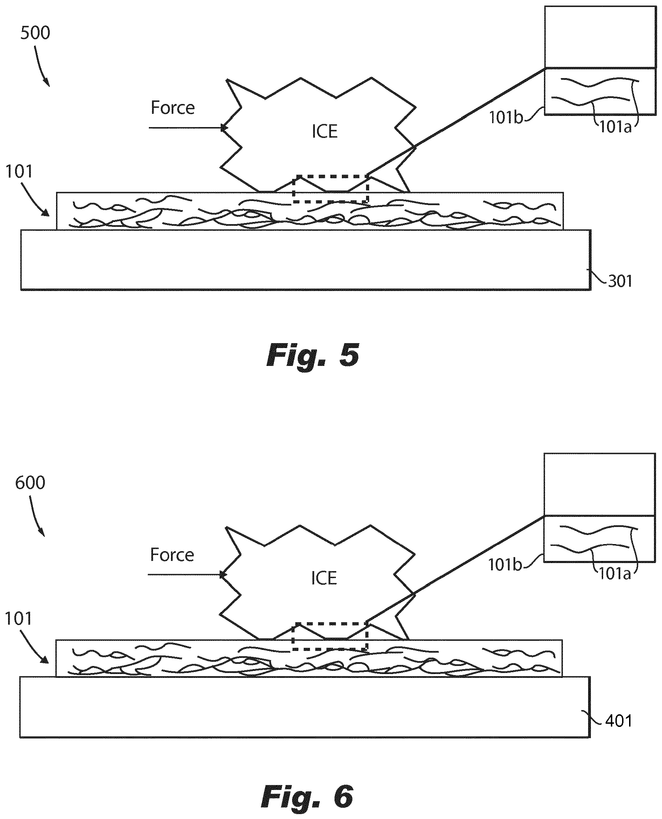

Referring to Figs. 5 and 6, in accordance with at least one aspect of this disclosure, an aircraft anti-icing and/or deicing system (e.g., system 500, 600) can include an aircraft structure (e.g., pneumatic deicer 301, electrically heated deicer 401) having a surface (e.g., 301a, 401a). The icephobic outer layer 101 can be bonded to the surface of the aircraft structure 301, 401 and can be configured to prevent ice from forming and/or building up on the outer layer 101 by preventing ice from adhering to the outer layer 101. The icephobic outer layer 101 can include any suitable icephobic outer layer 101, e.g., as described above.

In certain embodiments, as shown in Fig. 5, the structure can include a pneumatic deicing bladder 301 (e.g., made of a polymeric material). In certain embodiment, the structure can include an electrically heated deicer 301 (e.g., having an outer surface of a bondable material, e.g., chloroprene or epoxy, or a fiberglass or metal surface). In such embodiments, for example, the elastomeric reservoir 101a can be chemically bonded directly to the surface of the structure. The surface of the structure can be functionalized with silanes having reactive end groups to bond to the elastomeric reservoir 101a, for example. Any other suitable structure and/or bonding chemistry/technique is contemplated herein to bond the outer layer 101 directly to a desired structure. In certain embodiments, the deicers 301, 401 can be fabricated to have an icephobic outer layer 101.

In accordance with at least one aspect of this disclosure, a method can include chemically bonding a backer film to an elastomeric reservoir that is saturated with an icephobic and/or hydrophobic lubricant. The method can also include chemically bonding an adhesive to an opposite side of the backer film.

As disclosed above, certain embodiments include hydroxyl groups (or any other suitable functional group, e.g., formed with energy/heat) on backer film. Silane can then be applied to the hydroxyl groups or other suitable functional group. The silanes can be compatible or covalently boned to the elastomeric reservoir 101a (e.g., made of silicone). The elastomeric reservoir 101a can function like a soaked up sponge to hold the lubricant 101b. The backer film 103 can be a cross-link polymer that has solubility similar to the lubricant 101b. A PSA can stick to other side of the backer film 103, and also stick to the desired application. Such devices can allow the icephobic surface to be attached to any suitable structure like a sticker. Certain embodiments allow for the icephobic structure to be bonded directly to a desired structure (e.g., where at least the outer layer of the structure material is capable of being bonded).

In accordance with certain embodiments, an elastomeric polymer, e.g., polydimethylsiloxane, is formed into a film and swollen with a lubricant (e.g., an oligomeric or low molecular weight polymeric fluorocarbon, such as a perfluoropolyether). The liquid fluorocarbon can provide a smooth, mobile, icephobic free surface that inhibits the formation of ice and prevent sticking of ice that does form. Embodiments also provides a way to increase the time of icing. The swollen base polymer can be joined to a backer film and a pressure sensitive adhesive which can provides a method for the system to adhere strongly to a structural application substrate. The substrate can consist of a metallic or composite aerospace structure, or surfaces of conventional pneumatic deicing bladders or electrically heated deicers, or any other suitable substrate.

Embodiments provide ice-phobic surfaces that can passively slow ice formation and/or shed ice crystals on aerospace external surfaces. Passive coating-based deicing systems and devices reduce external power and weight penalties compared to current deicing technologies. Embodiments can be applied to exposed portions of nacelle structures, lifting surfaces, engine components, and/or any other suitable aircraft or non-aircraft structure. Embodiments are easily repairable via removal, surface treatment, and re-application of a fresh coating system.

## Claims

1. A passive anti-icing and/or deicing device (100), comprising:
an icephobic outer layer (101) configured to prevent ice from forming and/or building up on the outer layer (101) by preventing ice from adhering to the outer layer (101);
a backer film (103) attached to an underside of the icephobic outer layer (101); and
an adhesive (105) attached to the backer film (103) on an opposite side of the backer film (103) relative to the icephobic outer layer (101);
wherein the icephobic outer layer (101) includes an elastomeric reservoir (101a) at least partially saturated with an icephobic and/or hydrophobic lubricant.

2. The device of claim 1, wherein the backer film (103) is chemically bonded to the elastomeric reservoir (101a).

3. The device of claim 2, wherein the backer film (103) and the icephobic outer layer (101) are covalently bonded together; or
wherein the backer film (103) is made of PET or urethane.

4. The device of claim 2, wherein the adhesive (105) is made of a material that chemically bonds with the backer film (103).

5. The device of claim 4, wherein the adhesive (105) is a pressure sensitive adhesive (PSA); or wherein the adhesive (105) is configured to bond to at least one of aluminum, fiberglass, or composite material.

6. The device of claim 2, wherein the backer film (103) is silanized to bond to the elastomeric reservoir; or
wherein the elastomeric reservoir (101a) is made of silicone.

7. An aircraft anti-icing and/or deicing system, comprising:
an aircraft structure (107) having a surface; and
an icephobic outer layer (101) bonded to the surface of the aircraft structure (107) and configured to prevent ice from forming and/or building up on the outer layer (101) by preventing ice from adhering to the outer layer (101);
wherein the icephobic outer layer (101) includes an elastomeric reservoir (101a) at least partially saturated with an icephobic and/or hydrophobic lubricant.

8. The system of claim 7, wherein the structure (107) is a pneumatic deicing bladder.

9. The system of claim 7, wherein the structure (107) is an electrically heated deicer.

10. The system of claim 7, wherein the elastomeric reservoir (101a) is chemically bonded directly to the surface of the structure (107), and preferably
wherein the surface of the structure (107) is silanized to bond to the elastomeric reservoir.

11. The system of claim 7, wherein the structure (107) is an aircraft wing.

12. The system of claim 11, wherein the icephobic outer layer (101) is disposed on a majority of an upper surface of the wing; or
wherein the structure (107) is disposed downstream of a pneumatic or electrically heated deicer.

13. A method, comprising:
chemically bonding a backer film (103) to an elastomeric reservoir (101a) that is saturated with an icephobic and/or hydrophobic lubricant; and
chemically bonding an adhesive (105) to an opposite side of the backer film (103).

## Patentansprüche

1. Passive Enteisungsschutz- und/oder Enteisungsvorrichtung (100), umfassend:
eine eisphobe Außenschicht (101), die konfiguriert ist, um zu verhindern, dass sich Eis an der Außenschicht (101) bildet und/oder ansammelt, indem verhindert wird, dass Eis an der Außenschicht (101) haftet;
einen Trägerfilm (103), der an einer Unterseite der eisphoben Außenschicht (101) angebracht ist; und
einen Klebstoff (105), der an dem Trägerfilm (103) auf einer gegenüberliegenden Seite des Trägerfilms (103) in Bezug auf die eisphobe Außenschicht (101) angebracht ist;
wobei die eisphobe Außenschicht (101) ein Elastomerreservoir (101a) einschließt, das zumindest teilweise mit einem eisphoben und/oder hydrophoben Schmiermittel gesättigt ist.

2. Vorrichtung nach Anspruch 1, wobei der Trägerfilm (103) chemisch an das Elastomerreservoir (101a) gebunden ist.

3. Vorrichtung nach Anspruch 2, wobei der Trägerfilm (103) und die eisphobe Außenschicht (101) kovalent aneinander gebunden sind; oder
wobei der Trägerfilm (103) aus PET oder Urethan besteht.

4. Vorrichtung nach Anspruch 2, wobei der Klebstoff (105) aus einem Material besteht, das chemisch an den Trägerfilm (103) bindet.

5. Vorrichtung nach Anspruch 4, wobei der Klebstoff (105) ein Haftklebstoff (PSA) ist; oder wobei der Klebstoff (105) konfiguriert ist, um an mindestens eines von Aluminium, Glasfaser oder Verbundmaterial zu binden.

6. Vorrichtung nach Anspruch 2, wobei der Trägerfilm (103) silanisiert ist, um an das Elastomerreservoir zu binden; oder wobei das Elastomerreservoir (101a) aus Silikon besteht.

7. Luftfahrzeugenteisungsschutz- und/oder -enteisungssystem, umfassend:
eine Luftfahrzeugstruktur (107), die eine Oberfläche aufweist; und
eine eisphobe Außenschicht (101), die an die Oberfläche der Luftfahrzeugstruktur (107) gebunden und konfiguriert ist, um zu verhindern, dass sich Eis an der Außenschicht (101) bildet und/oder ansammelt, indem verhindert wird, dass Eis an der Außenschicht (101) haftet;
wobei die eisphobe Außenschicht (101) ein Elastomerreservoir (101a) einschließt, das zumindest teilweise mit einem eisphoben und/oder hydrophoben Schmiermittel gesättigt ist.

8. System nach Anspruch 7, wobei die Struktur (107) eine pneumatische Enteisungsblase ist.

9. System nach Anspruch 7, wobei die Struktur (107) ein elektrisch beheizter Enteiser ist.

10. System nach Anspruch 7, wobei das Elastomerreservoir (101a) chemisch direkt an die Oberfläche der Struktur (107) gebunden ist, und vorzugsweise
wobei die Oberfläche der Struktur (107) silanisiert ist, um an das Elastomerreservoir zu binden.

11. System nach Anspruch 7, wobei die Struktur (107) ein Luftfahrzeugflügel ist.

12. System nach Anspruch 11, wobei die eisphobe Außenschicht (101) auf einem Großteil einer oberen Fläche des Flügels angeordnet ist; oder
wobei die Struktur (107) nach einem pneumatischen oder elektrisch beheizten Enteiser angeordnet ist.

13. Verfahren, umfassend:
chemisches Binden eines Trägerfilms (103) an ein Elastomerreservoir (101a), das mit einem eisphoben und/oder hydrophoben Schmiermittel gesättigt ist; und
chemisches Binden eines Klebstoffs (105) an eine gegenüberliegende Seite des Trägerfilms (103).

## Revendications

1. Dispositif passif d'antigivrage et/ou de dégivrage (100), comprenant :
une couche extérieure glaciophobe (101) conçue pour empêcher la glace de se former et/ou de s'accumuler sur la couche extérieure (101) en empêchant la glace d'adhérer à la couche extérieure (101) ;
un film de support (103) fixé à une face inférieure de la couche extérieure glaciophobe (101) ; et
un adhésif (105) fixé au film de support (103) sur un côté opposé du film de support (103) par rapport à la couche extérieure glaciophobe (101) ;
dans lequel la couche extérieure glaciophobe (101) comporte un réservoir élastomère (101a) au moins partiellement saturé d'un lubrifiant glaciophobe et/ou hydrophobe.

2. Dispositif selon la revendication 1, dans lequel le film de support (103) est lié chimiquement au réservoir élastomère (101a).

3. Dispositif selon la revendication 2, dans lequel le film de support (103) et la couche extérieure glaciophobe (101) sont liés ensemble de manière covalente ; ou
dans lequel le film de support (103) est constitué de PET ou d'uréthane.

4. Dispositif selon la revendication 2, dans lequel l'adhésif (105) est constitué d'un matériau qui se lie chimiquement au film de support (103).

5. Dispositif selon la revendication 4, dans lequel l'adhésif (105) est un adhésif sensible à la pression (PSA) ; ou dans lequel l'adhésif (105) est conçu pour se lier à au moins l'un parmi l'aluminium, la fibre de verre ou le matériau composite.

6. Dispositif selon la revendication 2, dans lequel le film de support (103) est silanisé pour se lier au réservoir élastomère ; ou
dans lequel le réservoir élastomère (101a) est constitué de silicone.

7. Système d'antigivrage et/ou de dégivrage d'aéronef, comprenant :
une structure d'aéronef (107) ayant une surface ; et
une couche extérieure glaciophobe (101) liée à la surface de la structure d'aéronef (107) et conçue pour empêcher la glace de se former et/ou de s'accumuler sur la couche extérieure (101) en empêchant la glace d'adhérer à la couche extérieure (101) ;
dans lequel la couche extérieure glaciophobe (101) comporte un réservoir élastomère (101a) au moins partiellement saturé d'un lubrifiant glaciophobe et/ou hydrophobe.

8. Système selon la revendication 7, dans lequel la structure (107) est une vessie de dégivrage pneumatique.

9. Système selon la revendication 7, dans lequel la structure (107) est un dégivreur chauffé électriquement.

10. Système selon la revendication 7, dans lequel le réservoir élastomère (101a) est lié chimiquement
directement à la surface de la structure (107), et de préférence dans lequel la surface de la structure (107) est silanisée pour se lier au réservoir élastomère.

11. Système selon la revendication 7, dans lequel la structure (107) est une aile d'aéronef.

12. Système selon la revendication 11, dans lequel la couche extérieure glaciophobe (101) est disposée sur une majorité d'une surface supérieure de l'aile ; ou
dans lequel la structure (107) est disposée en aval d'un dégivreur pneumatique ou chauffé électriquement.

13. Procédé comprenant :
la liaison chimique d'un film de support (103) à un réservoir élastomère (101a) qui est saturé d'un lubrifiant glaciophobe et/ou hydrophobe ; et
la liaison chimique d'un adhésif (105) à un côté opposé du film de support (103).
